**Europäisches Patentamt**

**European Patent Office**

**Office européen des brevets**

(19)

(11) **EP 0 426 978 B1**

(12) **EUROPÄISCHE PATENTSCHRIFT**

(45) Veröffentlichungstag und Bekanntmachung des Hinweises auf die Patenterteilung:
**26.06.1996 Patentblatt 1996/26**

(51) Int. Cl.$^6$: **B01D 53/34**, B01D 53/40, C10L 1/10

(21) Anmeldenummer: **90117723.8**

(22) Anmeldetag: **14.09.1990**

(54) **Verfahren zur selektiven nicht-katalytischen Reduktion der Emission von Schadstoffen aus ölbefeuerten Kesselanlagen**

Process for the selective, non-catalytic reduction of the emissions from oil fired boiler plants

Procédé pour la réduction sélective non catalytique des émissions d'une chaufferie balisée de l'huile

(84) Benannte Vertragsstaaten:
**AT BE CH DE DK ES FR GB GR IT LI LU NL SE**

(30) Priorität: **15.09.1989 DE 3930851**
**12.04.1990 EP 90107062**

(43) Veröffentlichungstag der Anmeldung:
**15.05.1991 Patentblatt 1991/20**

(73) Patentinhaber: **ERC Emissions-Reduzierungs-Concepte GmbH**
**D-22844 Norderstedt (DE)**

(72) Erfinder:
• **Reynolds, Thomas, Dr.-Ing.**
**D-211 Handeloh 2 (DE)**

• **Meurer, Jan-Dirk**
**D-2107 Rosengarten (DE)**

(74) Vertreter: **Jaeschke, Rainer**
**Wilstedter Weg 24 a**
**D-22851 Norderstedt (DE)**

(56) Entgegenhaltungen:
**EP-A- 0 263 183**          **EP-A- 0 270 719**
**WO-A-87/02025**           **DE-A- 2 803 876**
**DE-A- 3 530 277**          **DE-C- 3 722 523**
**US-A- 4 166 724**

• **VGB - KONFERENZ KRAFTWERK UND UMWELT, 1989, Seiten 213-217; V. HOENIG et al.: "Schadstoffminderung bei Schwerölfeuerungen durch Additive: Russ, SO3, NOx"**

**Beschreibung**

Die Erfindung betrifft ein Verfahren zur selektiven nicht-katalytischen Reduktion der Emission von Schadstoffen aus ölbefeuerten Kesselanlagen unter Zudosierung den Verbrennungsvorgang beeinflussender chemischer Verbindungen zum flüssigen Brennstoff oder zur Verbrennungsluft.

Zum Stand der Technik wird verwiesen auf einen Aufsatz von V. Hoenig und G. Baumbach, erschienen in dem Sammelband der VGB-Konferenz Kraftwerk und Umwelt 1989, Seiten 213 - 217, "Schadstoffminderung bei Schwerölfeuerungen durch Additive: Ruß, $SO_3$, $NO_x$, dessen nachfolgend zitierte Einleitung das technische Umfeld und das der Erfindung zugrundliegende Problem umreißt.

Durch die 1983 in der 13. BImSchV (Großfeuerungsanlagenverordnung, GFAVO) und 1986 in der TA Luft eingeführten Schadstoffemissions-Grenzwerte für Feuerungsanlagen stehen auch sie Betreiber von Schwerölfeuerungen vor dem Problem, ihre Anlagen umweltfreundlicher betreiben zu müssen. Schweres Heizöl wird heute vorwiegend in der Industrie (Dampf- bzw. Heißwassererzeuger, Prozeßwärme), und in geringem Maße noch in Spitzenlastkraftwerken verbrannt. Die meisten Schwerölfeuerungen liegen in dem der TA Luft unterliegenden Leistungsbereich 50 $MW_{th}$. Im Bereich der GFAVO sind in der Bundesrepublik Deutschland nur noch wenige Ölkraftwerke in Betrieb.

Obwohl der Gesamtverbrauch von Heizöl S seit Mitte der 70er Jahre um mehr als die Hälfte zurückgegangen ist, ist sein Einsatz für manche Betreiber nach wie vor interessant. Vor allem wegen der niedrigen Ölpreise hat sich der Schwerölverbrauch in den Jahren 1986/87 stabilisiert.

(Schweres Heizöl fällt bei der Rohölverarbeitung an und wird zu einem Entsorgungsproblem, wenn in einer Vielzahl von sogenannten TA Luft Anlagen kein Heizöl S mehr eingesetzt werden kann.)

Neben den Stickoxidemissionen stellen die Emissionen von $SO_2$, Staub und von sauren Rauchgasbestandteilen ($SO_3$, an Flugstaub bzw. Flugkoks absorbierte Schwefelsäure) ein Problem dar. Die $SO_2$-Grenzwerte der TA Luft lassen sich durch die Verwendung eines schwefelarmen Öls (max. 1 %-Ware) einhalten. Zur Verminderung der $NO_x$-Emission kommen bei diesen Anlagen heute vorwiegend feuerungstechnische Primärmaßnahmen bzw. SNCR-Verfahren (selektive nichtkatalytische Reduktion) zum Einsatz. Eine Möglichkeit, die Emissionen von Ruß und sauren Rauchgasbestandteilen zu reduzieren, stellt die Aufbereitung des Öls mit Additiven dar. Hierzu wurden am Institut für Verfahrenstechnik und Dampfkesselwesen der Universität Stuttgart (IVD) spezielle Untersuchungen durchgeführt.

In dem U.S. Patent 4 208 386 für Arand et al. ist offenbart, Verbrennungsabgase mit Restsauerstoffgehalt und einem Gehalt an $NO_x$ mit Harnstoff, entweder als Feststoff oder in einem Lösungsmittel, beispielsweise ein Alkanol mit 1 - 3 Kohlenstoffatomen, Wasser, ein Keton mit 3 - 4 Kohlenstoffatomen, gelöst, bei erhöhter Temperatur in Kontakt zu bringen. Der Harnstoff soll in einer Menge angewandt werden, die wirksam ist, um den $NO_x$- Gehalt in dem Abgas wesentlich zu reduzieren. Die anzuwendenden Temperaturen liegen bei mindestens 1300 °F, wenn ein zusätzliches Reduktionsmittel anwesend ist und bei mindestens 1600 °F in Abwesenheit eines weiteren Reduktionsmittels.

In dem weiteren U.S. Patent 4 325 924 für Arand et al. wird offenbart, $NO_x$ enthaltende Verbrennungsabgase, die aber einen Überschuß an Brennstoff in Bezug auf den stöchiometrischen Sauerstoffbedarf aufweisen, mit Harnstoff entweder als Feststoff oder in Lösung bei Temperaturen oberhalb 1900 °F und in Mengen, die zu einer wesentlichen Verminderung des Gehaltes an $NO_x$ ausreichend sind, zu kontaktieren. Hier weist das Äquivalenzverhältnis von Brennstoff zu Sauerstoff einen Wert von größer als 1 : 1, insbesondere größer als 1,05 : 1 und im allgemeinen weniger als 1,5 : 1 auf. Die in einer Tabelle angegebenen erhaltenen Werte weisen in Abhängigkeit von der angewandten Harnstoffkonzentration signifikante Verminderungen der $NO_x$-Konzentration aus, allerdings werden je nach den angewandten Temperatur- und Konzentrationsverhältnissen auch wechselnde Mengen an Ammoniak in dem reduzierten Abgas beobachtet.

In dem U.S. Patent 3 900 554 ist der Einsatz von Ammoniak zur Reduzierung der Konzentration von Stickoxid (NO) in Verbrennungsabgasen offenbart. Die dem Patent zugrundeliegende Aufgabe ist, NO in Gegenwart von Restsauerstoff im Rauchgas selektiv zu reduzieren. Die Kosten eines Reduktionsmittels in einer solchen selektiven nicht-katalytischen Reduktion von NO würden den kleinen Mengen an zu reduzierendem NO entsprechen und nicht den viel größeren Mengen, die zum Reduzieren von NO sowie dem Restsauerstoff benötigt werden würden.

Die Patentanmeldung WO 87/02025 betrifft ein Verfahren zum Reduzieren von $NO_x$ in einen Abstrom der Verbrennung koblenstoffhaltiger Brennstoffe unter Sauerstoffüberschuß, wobei die Entstehung C-haltiger Emissionen minimiert ist. Es wird eine Dispersion einer verdünnten wässrigen Harnstofflösung in den Abstrom bei einer Temperatur von oberhalb 2000 °F, vorzugsweise oberhalb 2100 °F, injiziert. Die Konzentration der Harnstofflösung und die Tröpfchengröße in der Dispersion liegen vorzugsweise bei mindestens 80 Gew.-% Lösungsmittelgehalt und einer Tröpfchengröße im Bereich von 150 - 10 000 µm. In den besagten Abstrom wird eine wässrige Lösung von Harnstoff in Gegenwart eines "Oxygenates", beispielsweise Ethylenglykol, als eine Dispersion von Tröpfchen bei einer Temperatur oberhalb 1600 °F injiziert.

Der Erfindung liegt die Aufgabe zugrunde, den Gehalt an festen Teilverbrennungsprodukten (Koks, Ruß) zu reduzierem und eine Minimierung der $NO_x$-Werte im Abgas bei sparsamen Chemikalieneinsatz zu realisieren.

Die Aufgabe wurde gelöst durch die vorliegende Erfindung gemäß Anspruch 1.

Durch die Kombination dieser Maßnahmen in Verbindung mit dem eingangs bezeichneten Verfahren gelingt es in Bezug auf die Lambda-Zahl der Verbrennungsabgase in einen günstigeren Bereich bezüglich der $NO_x$-Bildung zu kommen und die Aufgabe der Minimierung der $NO_x$-Werte im Abgas bei sparsamem Chemikalieneinsatz zu realisieren. Die Lambda-Zahl kennzeichnet das Luft-Brennstoffgemisch und ist definiert durch das Verhältnis von zugeführter Luftmenge zu theoretischem Luftbedarf.

Da es sich bei dem der TA Luft unterliegenden Leistungsbereich von etwa bis zu 50 MW thermischer Leistung um den bevorzugten Einsatzbereich von Schwerölfeuerungen handelt, bezieht sich eine bevorzugte Anwendung der Erfindung auf den Einsatz von schwerem Heizöl (Heizöl S).

Die den Verbrennungsvorgang beeinflussenden chemischen Verbindungen werden vorzugsweise als mit dem flüssigen Brennstoff ohne Mischungslücke mischbare Lösungen über ein last- oder auch emissionsgesteuertes Brennerdosiersystem zugeführt. Ein derartiges Verfahren wird dadurch optimiert, daß einerseits auf den $NO_x$-Gehalt als Steuergröße abgestellt wird, andererseits berücksichtigt wird, daß Feuerungsanlagen der genannten Art auf unterschiedlichen Laststufen betrieben werden.

Geeignete Lösungsmittel zur Herstellung der Lösungen von chemischen Verbindungen, die den Verbrennungsvorgang beeinflussen, sind z. B. Gasöl, Kerosin oder Spindelöl.

Ein typisches Beispiel für die Zugabemengen der primärseitig in dem vorliegenden Verfahren anzuwendenden Metallverbindungen sieht wie folgt aus:

15,1 Gew-% Gasöl,
40,5 Gew-% Spindelöl,
37,0 Gew-% Calciumsulfonat,
7,5 Gew-% Eisentallat.

Bevorzugte Bereiche der sich durch Zumischung zu dem eingesetzten flüssigen Brennstoff oder durch Zerstäubung und Einsprühen der eingesetzten Lösung in die Verbrennungsluft ergebenden Metallgehalte in dem brennerseitigen Primärsystem sind die folgenden:

5 bis 200, vorzugsweise 50 bis 60 ppm Calcium (Ca),
3 bis 200, vorzugsweise 5 bis 50 ppm Eisen (Fe),
5 bis 200, vorzugsweise 10 bis 50 ppm Cer (Ce).

Hierbei können auch Kombinationen der Verbindungen der genannten Metalle eingesetzt werden. Falls z. B. Eisen und Calcium in Kombination eingesetzt werden, sind Gehalte von 2 bis 20 ppm Eisen und 50 bis 60 ppm Calcium, berechnet auf die Menge des eingesetzten Brennstoffes, bevorzugt.

Die bevorzugten Mengen der in dem Lösungsmittel gelösten Metallverbindungen hängen auch ab von der Art (Schwere) des eingesetzten Brennstoffes. Bei leichten Ölen sind 3 bis 15 ppm der Metallverbindung, bei schwereren Ölen 10 bis 200 ppm der eingesetzten Metallverbindung(en) bevorzugt, wobei die angegebenen Gehalte auf Metall in dem eingesetzten Brennstoff gerechnet sind.

Als Reduktionsmittel wird erfindungsgemäß Harnstoff in Form von wässrigen Lösungen in einem sekundärseitigen Kesseldosiersystem mittels im Feuerungsraum in Bezug auf die Brenner - bzw. Feuerungsflammenposition verfahrbarer Dosierlanzen eingesetzt.

Im allg. wird eine Harnstoffdosierung in Form der wässrigen Lösung ausreichend sein, bei welcher 1 bis 10, vorzugsweise, 2 bis 6 kg Harnstoff pro t eingesetzten Brennstofföles zur Anwendung kommen.

In einer typischen Fahrweise wird z. B. ein Gewichtsteil einer 40 %igen wässrigen Harnstoffstammlösung mit sechs Gewichtsteilen Wasser vermischt und die resultierende Harnstofflösung mit etwa 6 Gew.-% Harnstoff wird sekundärseitig in den Feuerungsraum von der dem Brenner gegenüberliegenden Seite aus eingesprüht. Die wässrige Harnstofflösung wird direkt in die heißen Verbrennungsgase eingesprüht, wobei ein sog. Temperaturfenster zwischen etwa 800 bis 1000 °C für die aufgabengemäße Minimierung der NOx-Konzentration im Abgas typisch ist.

Mit der Schwere des eingesetzten Heizöls nimmt u. a. auch der Gehalt an organisch gebundenem Stickstoff zu, welcher ebenfalls die unerwünschte NOx-Bildung bei der Verbrennung fördert. Daher wird man sich bei dem Einsatz von schwerem Heizöl im Verbrauch an Reduktionsmittel eher der oberen Grenze des angegebenen Bereiches von 1 bis 10 kg Harnstoff pro t Brennstoff nähern.

Als Führungsgröße wird die pro Zeiteinheit benötigte Brennstoffmenge herangezogen, die ohnehin beim Betrieb derartiger industrieller Anlagen zur Kontrolle des Verbrennungsvorganges und der Last ermittelt wird.

Diese Größe sowie der im Abgasstrom festgestelle $NO_x$-Gehalt werden beispielsweise einem Rechner oder einem Regler zugeführt, der ausgangsseitig auf (eine) im Feuerungsraum in Bezug auf die Brennerpositionen verfahrbare Dosierlanze(n) für das Reduktionsmittel einwirkt und zwar in der Weise, daß der niedrigste $NO_x$-Gehalt im Abgas als Betriebsgröße angesteuert wird.

Demgemäß besteht eine bevorzugte Ausführungsform der Erfindung darin, die Zugabe des Reduktionsmittels in den Feuerungsraum mittels eines lastabhängigen Kesseldosiersystems in Bezug auf die Position im Feuerungsraum sowie die Konzentration des Reduktionsmittels zu steuern, wobei das Kesseldosiersystem durch in Bezug auf die Brennerpositionen verfahrbare Dosierlanze(n) für das Reduktionsmittel gesteuert wird.

Das Reduktionsmittel wird so injiziert, daß in Abhängigkeit von der Auslastung der Feuerungsanlage der $NO_x$-Gehalt der Abgase bei vorgegebenem Ruß- bzw. Koksgehalt (= Staubgehalt) minimiert wird.

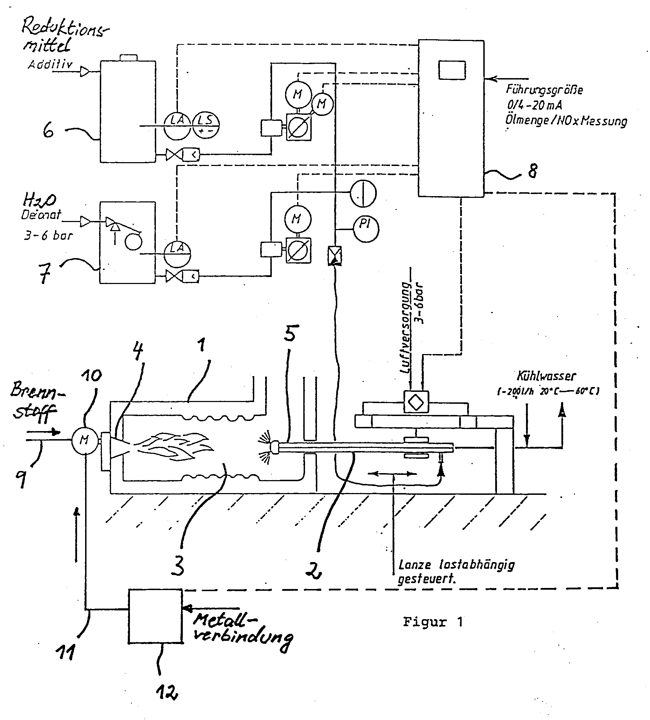

Das Funktionsschema eines solchen Systems zur Dosierung des Reduktionsmittels in den Feuerungsraum (Brennerraum) über das Kesseldosiersystem in Form einer wässrigen Lösung von Harnstoff wird anhand der Figur 1 der Zeichnung wie folgt weiter erläutert. Gleichzeitig werden nachfolgend Ergebnisse über Emissionsmessungen an einem Dampferzeuger (einem Zweiflammrohr- Rauchrohr Dreizug-Kessel), der neben Erdgas auch mit schwerem Heizöl befeuert werden kann, mitgeteilt.

Ein System zur Durchführung des erfindungsgemäßen Verfahrens entsprechend der vorliegenden Beschreibung ist in dem Schema in der Figur 1 gezeigt, in welchem das Primärsystem 1 eine Heizölfeuerung, z. B. eine Schwerölfeuerung mit Brenner 4, und das Sekundärsystem 2 eine verfahrbare Lanze 5 an der dem Brenner 4 gegenüberliegenden Seite des Feuerungsraumes 3 umfaßt. Die wässrige Harnstofflösung, die das Reduktionsmittel liefert, wird dem Feuerungsraum über die Lanze 5 zugeführt. Die wässrige Harnstofflösung wird durch Zumischung von entsalztem Wasser (Deionat) mittel Dosiereinheit 7 zu einer das Reduktionsmittel in wässriger Lösung enthaltenden Stammlösung hergestellt, wobei das Mischungsverhältnis über eine Steuereinheit 8 vorgegeben wird. Die Luftversorgung der Lanze 5 wird ebenfalls durch die Steuereinheit 8 vorgegeben.

Heizöl wird dem Brenner 4 mit Brennermotor und Gebläse 10 über Leitung 9 zugeführt, wobei die Lösung der Metallverbindung in dem kohlenwasserstoffhaltigen Lösungsmittel zur primärseitigen Beeinflussung des Verbrennungsvorganges über Leitung 11 und die ebenfalls von der Steuereinheit 8 gesteuerte Dosiervorrichtung 12 zugegeben wird.

Die Steuereinheit 8 übernimmt zwei Aufgaben. Erstens dosiert sie lastabhängig über das primäre Dosiersystem die in dem Lösungsmittel gelöste Metallverbindung. Zweitens nimmt sie mit Hilfe des Sekundärdosiersystems die Zugabe des Reduktionsmittels sekundärseitig direkt in den Rauchgasstrom lastabhängig und in Abhängigkeit von der NOx-Konzentration vor. Die Lanze 5 wird mittels der Steuereinheit 8 vorpositioniert und mittels eines vermaschten Regelkreises (Kaskadenregelung) nachreguliert. Der Verbrauch an Reduktionsmittel wird kesselspezifisch in Abhängigkeit von der Last in den Rechner der Steuereinheit 8 eingegeben.

Für das Verhalten des Gesamtsystems sind insbesondere der Einfluß des Brennstoffes, der Brennerkonstruktion sowie des Feuerungskessels von Bedeutung, wobei sich der Fachmann darüber klar ist, daß das Gesamtsystem auf den spezifischen Kessel eingeeicht werden muß.

Die wässrige Harnstofflösung mit einem Gehalt von 6 Gew.-% Harnstoff wird lastabhängig gesteuert und über verfahrbare Lanzen von hinten in die Flammenrohre des Kessels eingesprüht.

Die benötigten Wassermengen werden mittels Dosierpumpen (eine Pumpe je Flammrohr) unter Verdünnung der als Stammlösung eingesetzten 40 Gew-%igen wässrigen Harnstofflösung auf etwa 20 bis 0,5, vorzugsweise 10 bis 2 Gew.-% zudosiert, wobei die Mengen automatisch NOx - und lastabhängig verändert werden.

Die Daten des Dampferzeugers und der Ölfeuerungsanlagen sind die folgenden:

1. Daten des Dampferzeugers

| Bauart: | Zweiflammrohr-Rauchrohr-Dreizugkessel mit Überhitzer |
|---|---|
| Hersteller: | Standardkessel Duisburg |
| Zul. Kesselleistung: | 20 t/h |
| zul. Betriebsüberdruck: | 20 bar |
| zul. Heißdampftemperatur: | 285 °C |

2. <u>Daten des Ölfeuerungsanlage</u>

| Bauart: | Drehzerstäuber |
|---|---|
| Hersteller: | RAY, Fellbach/Stuttgart |
| Typ: | 2 x BGEC 700 |
| Öldurchsatz: | 120 - 700 kg/h |
| Baumusternummer: | 18304/82K |

Die Meßstelle befand sich im Abgaskanal nach Kesselende vor dem Rauchgasdichtemeßgerät. Die Meßstelle erfüllt in Bezug auf die störungsfreien Ein- und Auslaufstrecken die Anforderungen der VDI Richtlinie 2066, Blatt 1.

Bei jedem Betriebszustand wurden 1 bis 2 Messungen von 30 Minuten Dauer durchgeführt.

Es wurden gemessen:

| Stickstoffoxide: | Beckmann NO/NO$_x$-Gasanalysator, Meßprinzip Chemilumineszenz-Methode |
|---|---|
| Kohlenmonoxidgehalt: | Maihak-Infrarot-Gasanalysator |
| Staubgehalt: | Hülsenstaubmeßgeräte nach der VDI-Richtlinie 2066, Blatt 2 (Staubmessung in strömenden Gasen). Die Abgasgeschwindigkeit wurde mit Hilfe eines Prandtl'schen Staurohres und eines Mikromanometers ermittelt. |
| Rußzahl: | Bacharach-Rußtester und Filterpapier |
| O$_2$-Gehalt: | Servomex-O$_2$-Analysator, Meßprinzip Paramagnetismus, |
| Rauchgastemperatur: | FeKo-Thermoelement, Vergleichsmeßstelle 0 °C und Digital-Millivoltmeter. |

Die Brennstoffdurchsätze wurden an den vorhandenen Ölzählern bestimmt.

Ferner wurde die Ammoniakkonzentration im Abgas mit einer Nachweisgrenze von 0,5 mg/m$^3$ bestimmt.

Der eingesetzte Brennstoff wies die folgenden Spezifikationen auf:

| Additiv | 30 Gew.-ppm Ca + 7,5 Gew.-ppm Fe in Form öllöslicher Verbindungen | |
|---|---|---|
| Asche | DIN EN 7 | 0,07 Gew.-% |
| Asphaltene | DIN 51 595 | 0,68 Gew.-% |
| Stickstoff | ASTM | 0,31 Gew.-% |

Die wesentlichen Ergebnisse sind in den folgenden Tabellen 3 und 4 zusammengefaßt. Ferner sind die erhaltenen Meßwerte für den NH$_3$-Gehalt angegeben. Die angegebenen Werte beziehen sich auf trockenes Abgas, Normzustand und 3 Vol.-% 0$_2$.

Tabelle 1:

| Lastbereich | Grundlast | | Halblast | | | Vollast | | |
|---|---|---|---|---|---|---|---|---|
| Heizölverbrauch bei Nennlast | | | | | | 1395 | | kg/h |
| ermittelter Heizölverbrauch | 675 | | 960 | | | 1330 | | kg/h |
| Feuerungswärmeleistung bezogen auf Nennleistung | 48,4 | | 68,8 | | | 95,3 | | % |
| Dampfdruck Kessel (Überdruck) | 15,8-16,3 | | 14,5-15,0 | | | 14,0-14,8 | | bar |
| Heißdampftemperatur | 235 | | 240 - 245 | | | 245- 250 | | °C |
| Speisewassertemp. vor Eco | 105 | | 105 | | | 105 | | °C |
| $O_2$-Gehalt | 3,1 | 3,6 | 3,1 | 3,1 | 3,1 | 2,8 | 2,8 | % |
| Abgastemperatur | 166 | 165 | 175 | 175 | 176 | 189 | 189 | °C |
| Staubgehalt | − | − | − | − | − | 53,4 | 41,7 | $mg/m^3n$ |
| desgl. bez. auf 3% $O_2$ | − | − | − | − | − | 52,8 | 41,2 | $mg/m^3n$ |
| Rußzahl | − | − | − | − | − | 1-2 | 1-2 | |
| Ölderivate | − | − | − | − | − | keine | keine | |
| CO-Gehalt | − | − | − | − | − | 10 | 10 | $mg/m^3n$ |
| desgl. bez. auf 3% $O_2$ | − | − | − | − | − | 10 | 10 | $mg/m^3n$ |
| $NO_x$ berechnet als $NO_2$ | 396 | 375 | 400 | 404 | 402 | 455 | 451 | $mg/m^3n$ |
| desgl. bez. auf 3% $O_2$ | 371 | 388 | 402 | 406 | 404 | 450 | 446 | $mg/m^3n$ |

EP 0 426 978 B1

Tabelle 1 (Fortsetzung):

| Lastbereich | Grundlast | | Halblast | | | Vollast | | |
|---|---|---|---|---|---|---|---|---|
| Verbrauch-Reduktionsmittel | 2,9 | 2,9 | 11,75 | 11,75 | 11,75 | 25,9 | 25,9 | 1/h |
| NH3-Gehalt | 5,4 | 5,4 | 14,3 | 18,4 | 15,4 | 21,0 | 16,2 | $mg/m^3n$ |
| desgl. bez. auf 3% $O_2$ | 5,4 | 5,6 | 14,4 | 18,5 | 15,5 | 20,8 | 16,0 | $mg/m^3n$ |

Tabelle 2

| Lastbereich | Grundlast | Halblast | Vollast | | |
|---|---|---|---|---|---|
| Heizölverbrauch bei Nennlast | | | 1380 | | kg/h |
| ermittelter Heizölverbrauch | 666 | 953 | 1316 | | kg/h |
| Feuerungswärmeleistung bezogen auf Nennleistung | 48,3 | 69,1 | 95,4 | | % |
| Dampfdruck Kessel (Überdruck) | 13,5 - 15,0 | 15,7 | 14,7 - 15,5 | | bar |
| Heißdampftemp. | 230 - 233 | 245 - 250 | 247 - 250 | | °C |
| Speisewassertemp. vor Eco | 105 | 105 | 105 | | °C |
| $O_2$ Gehalt | 3,6 | 3,0 | 3,1 | 2,8 | % |
| Abgastemperatur | 166 | 178 | 192 | 192 | °C |
| Staubgehalt | - | - | 58,9 | 53,6 | $mg/m^3n$ |
| desgl. bez. auf 3% $O_2$ | - | - | 59,2 | 53,0 | $mg/m^3n$ |
| Rußzahl | - | - | 2 | 2 | |
| Ölderivate | - | - | keine | keine | |
| CO-Gehalt | - | - | <10 | <10 | $mg/m^3n$ |
| desgl. bez. auf 3% $O_2$ | - | - | <10 | <10 | $mg/m^3n$ |
| $NO_x$ berechnet als $NO_2$ | 519 | 619 | 674 | 683 | $mg/m^3n$ |
| desgl. bez. auf 3% $O_2$ | 537 | 619 | 678 | 675 | $mg/m^3n$ |

In der Tabelle 1 sind die mit wässriger Harnstofflösung erzielten Betriebswerte angegeben. In der Tabelle 2 sind als Vergleichsversuch die Betriebswerte ohne den Einsatz von wässriger Harnstofflösung als Reduktionsmittel angegeben.

7

Tabelle 3

| Emissionen | | Meßwerte | | |
|---|---|---|---|---|
| | | Grundlast | Halblast | Vollast |
| Staubgehalt | mg/m$^3$n | - | - | 41,2-52,8 |
| Rußzahl | | - | - | 1 - 2 |
| Ölderivate | | - | - | keine |
| Kohlenmonoxidgehalt | mg/m$^3$n | - | - | 10 |
| Stickstoffdioxidgehalt | mg/m$^3$n | 371 - 388 | 402 - 406 | 446 - 450 |
| Ammoniakgehalt | mg/m$^3$n | 5,4 - 5,6 | 14,4-18,5 | 16,0-20,8 |

Tabelle 4

| Emissionen | | Meßwerte | | |
|---|---|---|---|---|
| | | Grundlast | Halblast | Vollast |
| Staubgehalt | mg/m$^3$n | - | - | 53,0-59,2 |
| Rußzahl | | - | - | 2 |
| Ölderivate | | - | - | keine |
| Kohlenmonoxidgehalt | | - | - | <10 |
| Stickstoffdioxidgehalt | mg/m$^3$n | 537 | 619 | 675-678 |

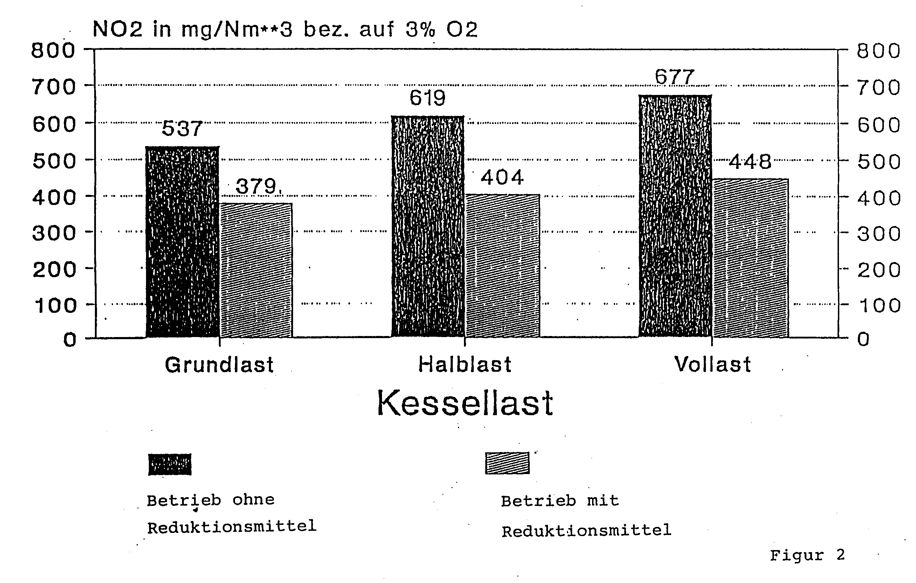

Wie aus den Tabellen 3 und 4 sowie der Figur 2 der Zeichnung, in der die erhaltenen Meßwerte graphisch dargestellt sind, ersichtlich ist, wurden beim Einsatz von wässrigen Harnstofflösungen als Reduktionsmittel in Verbindung mit den in dem Brennstoff als Additive zugesetzten öllöslichen Verbindungen Calciumsulfonat und Eisen(II)-tallat die Stickstoffoxidgehalte im Abgas um etwa ein Drittel gesenkt.

In allen Lastzuständen wurde der in der TA Luft vom Februar 1986 angegebene Grenzwert von 450 mg/m$^3_n$ für den Stickstoffdioxidgehalt im Abgas eingehalten.

Im Bezug auf den Staubgehalt werden bei vergleichbarer Rußzahl und vergleichbarem Kohlenmonoxidgehalt Staubmeßwerte von 41,7 bis 58,9 mg/m$^3_n$ eingehalten.

Der rechnerische Wert der Oxidasche ergibt einen Wert von ca. 59 mg/m$^3$, d.h. der Staubgehalt des Abgases war durch den Einsatz des primärseitigen Additives nahezu kohlenstoffrei.

Durch das erfindungsgemäße Verfahren gelingt est, in Bezug auf die Lambda-Zahl der Verbrennungsabgase in einen günstigen Bereich bezüglich der $NO_x$-Bildung zu kommen und in Kombination mit dem Kesseldosiersystem zur $NO_x$-Reduzierung auch eine Minimierung der $NO_x$-Werte im Abgas bei wirksamer Reduzierung des Gehaltes an festen Teilverbrennungsprodukten (Koks, Ruß) und sparsamem Chemikalieneinsatz zu realiseren.

**Patentansprüche**

1. Verfahren zur Reduktion der Emission von Schadstoffen aus ölbefeuerten Kesselanlagen unter Zudosierung

   - mindestens einer den Verbrennungsvorgang beeinflussenden chemischen Verbindung ausgewählt aus der Gruppe folgender Salze organischer Säuren: Naphthenate, Octoate, Tallate sowie Sulfonate mit Metallen der Gruppe Mg, Ca, Ce, Fe in einer mit dem flüssigen Brennstoff mischbaren Lösung zum Brennstoff oder zur Verbrennungsluft und

   - eines Reduktionsmittels zur selektiven nicht-katalytischen Reduktion in den Feuerungsraum in die heißen Verbrennungsgase über ein Kesseldosiersystem unter Verwendung eines flüssigen oder auch gasförmigen Trägermittelstroms als wäßrige Lösung von Harnstoff oder auch Harnstoffvorläufern wie Ammoniak oder Ammoniumcarbonat, die auch weitere Bestandteile wie Alkanole, Alkancarbonsäuren, Alkanale oder Alkanone enthalten können.

2. Verfahren nach Anspruch 1, dadurch gekennzeichnet, daß schweres Heizöl als Brennstoff eingesetzt wird.

3. Verfahren nach Anspruch 1, dadurch gekennzeichnet, daß die den Verbrennungsvorgang beeinflussenden chemischen Verbindungen als mit dem flüssigen Brennstoff ohne Mischungslücke mischbare Lösungen über ein last- oder auch emissionsgesteuertes Brennerdosiersystem zugeführt werden.

4. Verfahren nach Anspruch 1, dadurch gekennzeichnet, daß als Reduktionsmittel eine wäßrige Harnstofflösung zudosiert wird, die in dem Kesseldosiersystem auf 20 bis 0,5 Gew.-%, vorzugsweise 10 bis 2 Gew.-% Harnstoff verdünnt wird.

5. Verfahren nach Anspruch 1, dadurch gekennzeichnet, daß die Zugabe des Reduktionsmittel in den Feuerungsraum mittels eines lastabhängigen Kesseldosiersystems in Bezug auf die Position im Feuerungsraum sowie die Konzentration des Reduktionsmittels gesteuert wird.

6. Verfahren nach Anspruch 5, dadurch gekennzeichnet, daß das Kesseldosiersystem mittels im Feuerungsraum in Bezug auf die Brennerpositionen verfahrbarer Dosierlanzen für das Reduktionsmittel gesteuert wird.

7. Verfahren nach Anspruch 5, dadurch gekennzeichnet, daß das Reduktionsmittel so injiziert wird, daß in Abhangigkeit von der Auslastung der Feuerungsanlage der NOx-Gehalt der Abgase bei vorgegebenem Ruß- bzw. Staubgehalt minimiert wird.

**Claims**

1. A process for the reduction of pollutant emission from oil-fired boiler plants with the charging of

   - at least one chemical compound which influences the combustion process, selected from the group comprising the following salts of organic acids: naphthenates, octoates, tallates and sulphonates with metals from the group comprising Mg, Ca, Ce and Fe, in a solution miscible with the liquid fuel, into the fuel or into the combustion air, and
   - a reducing agent for selective non-catalytic reduction into the hot combustion gases in the furnace chamber, *via* a boiler metering system, using a liquid or gaseous carrier stream, as an aqueous solution of urea or urea precursors such as ammonia or ammonium carbonate, which can also contain further constituents such as alkanols, alkanecarboxylic acids, alkanals or alkanones.

2. A process according to Claim 1, characterized in that heavy heating oil is used as the fuel.

3. A process according to Claim 1, characterized in that the chemical compounds which influence the combustion process are introduced as solutions miscible in all proportions with the liquid fuel, *via* a load-controlled or emission-controlled burner metering system.

4. A process according to Claim 1, characterized in that the reducing agent metered in is an aqueous urea solution which is diluted in the boiler metering system to 20 to 0.5% by weight and preferably 10 to 2% by weight of urea.

5. A process according to Claim 1, characterized in that the introduction of the reducing agent into the furnace chamber is controlled by means of a load-dependent boiler metering system as regards the position in the furnace chamber and the concentration of the reducing agent.

6. A process according to Claim 5, characterized in that the boiler metering system is controlled by means of metering lances for the reducing agent, which can move in the furnace chamber relative to the burner positions.

7. A process according to Claim 5, characterized in that the reducing agent is injected in such a way that, as a function of the furnace load, the $NO_x$ content of the off-gases is minimized for a given soot or dust content.

**Revendications**

1. Procédé de réduction de l'émission de polluants par des chaudières alimentées en fuel par addition, dosée :
   d'au moins un composé chimique influençant le processus de combustion, choisi parmi le groupe de sels suivants d'acides organiques : naphténates, octoates, tallates ainsi que sulfonates de métaux du groupe Mg, Ca, Ce, Fe, dans une solution miscible avec le combustible liquide au combustible ou à l'air de combustion et
   d'un réducteur de réduction sélective non catalytique dans la chambre de combustion dans les gaz de combustion très chaud par un système de dosage dans la chaudière en utilisant un courant porteur liquide ou gazeux sous forme de solution d'urée ou aussi de précurseurs d'urée tels que l'ammoniac ou le carbonate d'ammonium, qui peuvent comprendre aussi d'autres composants tels que des alcanols, des acides alcanoïques, des alcanols, des acides alcanoïques, des alcanols ou des alcanones.

2. Procédé selon la revendication 1, caractérisé en ce qu'on utilise du fuel lourd, comme combustible.

3. Procédé selon la revendication 1, caractérisé en ce qu'on introduit les composés chimiques influençant le processus de combustion sous forme de solutions miscibles au combustible liquide sans lacune de miscibilité via un système de dosage dans le brûleur commandé par la charge ou le taux d'émission aussi.

4. Procédé selon la revendication 1, caractérisé en ce qu'on introduit comme réducteur une solution aqueuse d'urée qu'on dilue dans le système de dosage de la chaudière de 20 à 0,5 % en poids, de préférence de 10 à 2 % en poids d'urée.

5. Procédé selon la revendication 1, caractérisé en ce qu'on régule l'addition du réducteur dans la chambre de combustion au moyen d'un système de dosage dans la chaudière fonction de la charge par rapport à la position dans la chambre de combustion ainsi qu'à la concentration en réducteur.

6. Procédé selon la revendication 5, caractérisé en ce qu'on commande le système de dosage dans la chaudière par des lances de dosage de réducteur réglables par rapport aux positions du brûleur.

7. Procédé selon la revendication 5, caractérisé en ce qu'on injecte le réducteur de telle façon qu'on minimise la teneur en $NO_X$ des gaz de fumée en fonction de la charge de l'unité de combustion pour une teneur en noir de carbone ou en poussières spécifiée.

Reduktionsmittel
Additiv

6

H₂O
Deonat
3-6 bar

7

Brennstoff

10
4
1
5

9

3

11

2

Metallverbindung

12

LA
LS
+ -

M
M

LA

M

PI

Führungsgröße
0/4-20 mA
Ölmenge / NOx Messung

8

Luftversorgung
3-6 bar

Kühlwasser
(-200 l/h  20°C — 60°C)

Lanze lastabhängig
gesteuert.

Figur 1

EP 0 426 978 B1

**NO2 in mg/Nm**3 bez. auf 3% O2**

Kessellast

Betrieb ohne
Reduktionsmittel

Betrieb mit
Reduktionsmittel

Figur 2